Europäisches Patentamt

European Patent Office

Office européen des brevets

(19)

(11) Numéro de publication: **0 311 476**
**A1**

(12) **DEMANDE DE BREVET EUROPEEN**

(21) Numéro de dépôt: **88402406.8**

(22) Date de dépôt: **23.09.88**

(51) Int. Cl.⁴: **C 08 K 3/08**
C 08 K 9/12, H 01 B 1/22,
C 09 D 5/24

(30) Priorité: **05.10.87 FR 8713712**

(43) Date de publication de la demande:
**12.04.89 Bulletin 89/15**

(84) Etats contractants désignés:
**AT BE CH DE ES FR GB GR IT LI LU NL SE**

(71) Demandeur: **RHONE-POULENC CHIMIE**
**25, quai Paul Doumer**
**F-92408 Courbevoie Cédex (FR)**

(72) Inventeur: **Charmot, Dominique**
**18, rue Mathis**
**F-75019 Paris (FR)**

**Fiard, Jean-François**
**16, rue des Orteaux**
**F-75020 Paris (FR)**

(74) Mandataire: **Fabre, Madeleine-France et al**
**RHONE-POULENC INTERSERVICES Service Brevets**
**Chimie 25, quai Paul Doumer**
**F-92408 Courbevoie Cédex (FR)**

(54) Particules métallisées de polymère fonctionnalisé réticulé, leur procédé de préparation et leur application à la fabrication de matériaux électro-conducteurs.

(57) Particules de polymère métallisées constituées d'un polymère réticulé portant des groupes nucléophiles complexants des sels de métaux de potentiel d'oxydo-réduction · supérieur à - 0,8 V, et présentant à leur surface une couche métallique constituée d'au moins un métal à l'état de valence zéro de potentiel d'oxydo-réduction supérieur à - 0,8 V.

Elles sont obtenues par métallisation par voie chimique de grains de polymère réticulé complexant.

Elles peuvent être utilisées pour la fabrication de matériaux electroconducteurs (colles, peintures...).

EP 0 311 476 A1

## Description

## PARTICULES METALLISEES DE POLYMERE FONCTIONNALISE RETICULE, LEUR PROCEDE DE PREPARATION ET LEUR APPLICATION A LA FABRICATION DE MATERIAUX ELECTRO-CONDUCTEURS

La présente invention a pour objet des particules de polymère fonctionnalisé réticulé métallisées en surface par au moins un métal à l'état de valence zéro, particules se présentant telles quelles ou en dispersion dans l'eau ou dans un liquide organique, leur procédé de préparation et leur application à la préparation de matériaux électro-conducteurs notamment de peintures et de colles électro-conductrices.

Il est connu d'après la demande japonaise publiée sous le n° 262.846/1985 de préparer des particules de polyacrylonitrile revêtues d'un métal électroconducteur. De telles particules présentent l'inconvénient d'être sensibles aux solvants organiques et aux pH alcalins, ce qui restreint leur domaine d'utilisation.

La Demanderesse a trouvé de nouvelles particules de polymère métallisées ne présentant pas ces inconvénients.

Selon l'invention, il s'agit de particules de polymère métallisées, caractérisées en ce qu'elles sont constituées d'un polymère réticulé présentant un taux d'insolubles d'au moins 0,5 % en poids, de préférence d'au moins 10 % en poids (et plus généralement d'au moins 50 % en poids), et portant des groupes nucléophiles complexants des sels des métaux de potentiel d'oxydo-réduction supérieur à - 0,8 V (de préférence d'au moins - 0,3 V), et en ce qu'elles présentent à leur surface une "couche" métallique constituée d'au moins un métal à l'état de valence zéro de potentiel d'oxydo-réduction supérieur à - 0,8 V (de préférence d'au moins - 0,3 V).

Le terme "couche" métallique signifie aussi bien une couche quasi uniforme de métal qu'une succession de domaines métalliques.

Comme polymère réticulé pouvant constituer lesdites particules on peut citer tout particulièrement les copolymères dérivés de :
- 20 à 70 %, de préférence 30 à 65 % en poids, d'au moins un monomère monoéthylénique non ionique non complexant
- 0 à 10 %, de préférence 0 à 5 % en poids, d'au moins un acide carboxylique éthyléniquement insaturé
- 15 à 60 %, de préférence 25 à 50 % en poids, d'au moins un monomère monoéthylénique complexant des sels de métaux de potentiel d'oxydo-réduction supérieur à - 0,8 V (de préférence d'au moins -0,3 V)
- 5 à 20 %, de préférence 10 à 20 % en poids, d'un monomère polyéthylénique réticulable.

Comme exemples de monomères on peut citer tout particulièrement :
- comme monomères monoéthyléniques non ioniques non complexants
. le styrène et ses dérivés (vinyltoluene, ethylvinylbenzene...)
. les esters et amides de l'acide (meth) acrylique tels que le methacrylate de methyle, l'acrylate de butyle, (meth) acrylamide,
. les esters vinyliques (acétate de vinyle, propionate de vinyle
. les chlorures de vinyle et vinylidène;
- comme acides carboxyliques éthyléniquement insaturés :
. l'acide (meth) acrylique et les diacides monoethyleniques tels que l'acide maleique, l'acide itaconique
- comme monomères monoéthyléniques complexants :
. les vinylpyridines (2-vinylpyridine, 4-vinylpyridine, 2-methyl, 5-vinylpyridine)
. les di(ethyl)amino-alkyl(meth)acrylates
. les di(ethyl)amino-alkyl(meth)acrylamides,...
. l'allylamine
. l'éthylene imine
. le (meth)acrylonitrile
. le 1-vinylimidazole
. les dialkylaminométhyl styrènes
. la vinylpyrrolidone
- comme monomères polyéthyléniques réticulables :
. le divinylbenzène et ses dérivés
. les dienes conjugués (butadiene,...)
. les dérivés polyallyliques (tetraallylethylene, ...)
. les (meth) acrylates de polyols (dimethacrylate d'éthylene glycol ...)
. le methylene-bis(acrylamide)
. l'acide-bis(acrylamido)acétique
ainsi que ceux présentant en outre des propriétés complexantes tels que les divinylpyridines, les méthyldivinylpyridines ...

Il est évident qu'une partie du monomère monoéthylénique complexant peut être remplacé par un monomère polyéthylénique réticulable complexant.

Parmi les métaux présents à la surface desdites particules on peut citer l'argent, l'or, le cobalt, le cuivre, le germanium, le nickel, le plomb, le palladium, le platine, l'étain...

Selon l'invention, les particules métallisées peuvent se présenter telles quelles ou en dispersion dans l'eau ou dans un liquide organique, la concentration des particules en dispersion pouvant aller jusqu'à 95 % en poids.

Les particules métallisées faisant l'objet de l'invention sont de forme sphérique ; le grain de polymère réticulé peut présenter un diamètre de l'ordre de 0,1 à 100 microns, de préférence de l'ordre de 0,5 à 10 microns. Pour un diamètre de grain de polymère réticulé donné, la couche métallique peut atteindre environ de 0,005 micron à 0,1 micron. Lesdites particules peuvent être monopopulées ou constituées d'un mélange de particules monopopulées de tailles différentes.

La couche superficielle de métal correspond en poids à 10 à 60 % environ par rapport au poids de polymère, et de préférence de l'ordre de 20 à 50 %.

Il peut s'agir d'une couche simple, mais le plus généralement d'une multicouche d'un ou plusieurs métaux.

Lesdites particules faisant l'objet de l'invention peuvent être préparées par métallisation chimique de grains de polymère réticulé ayant un taux d'insolubles d'au moins 0,5 % en poids, de préférence d'au moins 10 % en poids (et plus généralement d'au moins 50 % en poids) et portant des groupes nucléophiles complexants des sels des métaux de potentiel d'oxydo-réduction supérieur à - 0,8 V (de préférence d'au moins - 0,3 V), l'opération de métallisation étant réalisée à l'aide de sels de métaux de potentiel d'oxydo-réduction supérieur à - 0,8 V, de préférence d'au moins - 0,3 V.

Comme polymère réticulé pouvant constituer lesdits grains, on peut citer les copolymères déjà mentionnés ci-dessus dérivés d'au moins un monomère monoéthylénique non ionique non complexant, éventuellement d'au moins un acide carboxylique éthyléniquement insaturé, d'au moins un monomère monoéthylénique complexant et d'au moins un monomère polyéthylénique réticulable.

Lesdits grains sont sphériques et présentent une taille de l'ordre de 0,1 à 100 microns et plus généralement de l'ordre de 0,5 à 10 microns ; lesdits grains peuvent être monopopulés ou constitués d'un mélange de grains monopopulés de tailles différentes. Ils peuvent être préparés selon un mode quelconque de polymérisation connu de l'homme de l'art, en particulier par polymérisation en émulsion, microsuspension...

L'opération de métallisation chimique peut être réalisée par mise en contact en phase liquide d'un sel minéral ou organique de métal à déposer avec les grains de polymère réticulé portant des motifs complexants et réduction jusqu'à l'état de valence zéro dudit métal.

Les modes opératoires possibles sont bien connus de l'homme de l'art ; le mode choisi sera fonction de la nature du métal à déposer.

Ainsi pour un métal facilement réductible comme le palladium ou le platine, une simple mise en contact d'une solution aqueuse de chlorure, de nitrate ... de métal avec une dispersion de grains de polymère fonctionnalisé réticulé dans un mélange eau/alcool réducteur, suivie d'un chauffage de préférence à pH basique, est suffisante pour permettre au métal de se déposer quasi uniformément à la surface des grains de polymères fonctionnalisés réticulés.

Parmi les alcools réducteurs, on peut citer tout particulièrement le méthanol et l'éthanol.

Pour un métal tel que l'argent de potentiel d'oxydo-réduction de + 0,80 V, un mode de métallisation particulièrement intéressant consiste à mettre en contact une solution aqueuse de nitrate d'argent par exemple avec une dispersion de grains de polymère réticulé dans un mélange eau / alcool, puis à chauffer après addition d'ammoniaque et d'un réducteur tel que le formaldehyde, l'acétaldehyde ...

Pour un métal plus difficilement réductible tel que le cuivre, le nickel, le cobalt, un mode opératoire en plusieurs étapes est préféré.

Le procédé consiste alors à faire une première métallisation avec un sel d'un métal plus facilement réductible comme le palladium ou l'argent selon les modes opératoires ci-dessus indiqués, puis à mettre en contact un sel soluble (sulfate, chlorure ...) de cuivre, nickel, cobalt ... avec une dispersion des particules de polymère palladiées ou argentées dans un mélange eau / alcool, puis à chauffer en présence de $NaBH_4$, $NH_2 - NH_2$, d'un aminoborane, d'un hypophosphite ...

Les modes opératoires décrits ci-dessus sont de préférence répétés plusieurs fois pour former des multicouches de métal ou de métaux.

Les particules métallisées obtenues peuvent être séparées du milieu de réaction (par exemple par décantation) et éventuellement redisper sées dans l'eau ou dans un solvant organique ; de telles dispersions peuvent contenir jusqu'à 95 % en poids de particules métallisées.

La quantité de sel de métal à mettre en oeuvre pour préparer les particules métallisées faisant l'objet de l'invention, exprimée en poids de métal correspond à 10 à 60 % par rapport au poids de polymère fonctionnalisé réticulé, et généralement de l'ordre de 20 à 50 %.

Les particules métallisées ou leurs dispersions aqueuses sont stables à l'oxydation, ne sont pas sensibles ni aux solvants organiques ni aux pH alcalins.

Toutes ces propriétés permettent aux produits de l'invention d'être utilisables pour la préparation de colles et de peintures électroconductrices ; en micro-connectique ; comme guide d'ondes...

Les exemples suivants sont donnés à titre indicatif et ne peuvent être considérés comme une limite du domaine et de l'esprit de l'invention.

## EXEMPLE 1

Le polymère fonctionnalisé réticulé mis en oeuvre présente une granulométrie uniforme de 2 microns ; il est obtenu par polymérisation en microsuspension des monomères suivants :
styrène    65 % en poids
divinylbenzène    10 % en poids
vinyl-4 pyrridine    25% en poids
puis atomisation.

Le taux d'insolubles du polymère est d'environ 70 % en poids (mesure fait à l'aide d'un extracteur soxhlet, à l'aide de cartouches ALUNDUM commercialisées par PROLABO ; l'extraction est faite à l'acétone pendant 2 heures au reflux).

Le matériel utilisé est constitué d'un bain marie et d'un ballon de 100 ml muni d'un agitateur, d'un réfrigérant et d'une ampoule de coulée.

## 1 ère étape de métallisation

1 g de polymère fonctionnalisé réticulé atomisé est redispersé dans un mélange de 5 ml d'eau épurée et de 45 ml de méthanol.

On ajoute 3 ml d'ammoniaque (solution aqueuse à 20 % en poids) puis 200 mg de nitrate d'argent dissous dans 2 ml d'eau.

Le milieu est agité fortement puis un mélange de 3 ml d'ammoniaque (solution aqueuse à 20 %) et de 3 ml de formaldehyde (solution aqueuse à 35 % en poids) sont coulés lentement en 5 mn.

Le ballon est ensuite chauffé au bain marie vers 60°C ; la solution se colore doucement en brun ; 3 ml de formaldehyde (solution à 35 %) sont ajoutés en une seule fois.

La température est encore maintenue pendant 1/2 heure, puis on revient à la température ambiante.

2 ème étape de métallisation

La dispersion de polymère métallisé ainsi obtenue est à nouveau soumise à l'étape de métallisation décrite ci-dessus.

On élimine le surnageant par décantation.

On obtient 1,25 g de particules de couleur brun clair.

Celles-ci présentent une taille de l'ordre de 2 à 2,1 microns ; la couche métallique est quasi uniforme, elle présente une épaisseur de 0,08 micron ; cette couche d'argent représente environ 20 % par rapport au poids du polymère réticulé.

EXEMPLE 2

Le matériel utilisé est celui de l'exemple 1.

1 ère étape de métallisation

2 g du polymère réticulé atomisé semblable à celui de l'exemple 1 sont dispersés dans un mélange de 30 ml d'eau déminéralisée et de 20 ml de méthanol. Le pH est ajusté à 12 par ajout de potasse.

300 mg de chlorure de palladium sont dissous dans 20 ml d'acide chlohydrique 1 N, puis de la potasse 2 N est ajoutée jusqu'à un pH de 5.

Cette solution est coulée lentement dans le ballon, puis le pH est ajusté à 11 par de la potasse.

Le mélange est agité pendant 1/2 heure, puis porté à reflux.

La température est maintenue 1/4 d'heure, puis on revient à la température ambiante.

2 ème étape de métallisation

La dispersion de polymère métallisé ainsi obtenue est à nouveau soumise à l'étape de métallisation ci-dessus décrite à l'aide de 500 mg de chlorure de palladium (au lieu de 300 mg) et de 40 ml d'acide chlorhydrique (au lieu de 20 ml).

On élimine le surnageant par décantation.

On obtient 2,5 g de produit brun.

La taille des particules est de l'ordre de 2 - 2,1 microns.

L'épaisseur de la couche de métal est de 0,07 micron environ.

Le poids de métal représente environ 20 % par rapport au poids de polymère réticulé.

EXEMPLE 3

Le matériel utilisé est celui de l'exemple 1.

1 ère étape de métallisation

1 g de polymère réticulé atomisé semblable à celui de l'exemple 1 est dispersé dans un mélange de 5 ml d'eau épurée et 45 ml de méthanol.

On ajoute 3 ml d'ammoniaque (solution aqueuse à 20 % en poids), puis 50 mg de nitrate d'argent dissous dans 2 ml d'eau.

Le mélange est agité fortement ; après 15 mn, un mélange de 1,5 ml d'ammoniaque (solution aqueuse à 20 %) et de 1,5 ml de formaldehyde (solution aqueuse à 35 % en poids) sont coulés lentement en 5 mn.

Le ballon est chauffé au bain marie vers 60°C. Une coloration brun clair apparait. On ajoute alors 1 ml de formaldehyde en une fois. La température est encore maintenue pendant 1/2 heure, puis on revient à la température ambiante.

2 ème étape de métallisation

On dissout 300 mg de chlorure de nickel et 30 mg de nitrate d'argent dans 5 ml d'eau.

On ajoute, sous agitation, cette solution à la dispersion de polymère métallisé.

Le milieu est agité pendant 1/2 heure puis on monte la température jusqu'à 40 °C.

On ajoute lentement 5 ml d'une solution aqueuse à 20 % en poids d'hydrazine.

En fin d'addition, le mélange est porté à 60 °C pendant 1/4 d'heure, puis refroidi à température ambiante.

On obtient 1,2 g de polymère métallisé.

La taille des particules est de l'ordre de 2 microns.

L'épaisseur de la couche de métal est de l'ordre de 0,08 micron.

**Revendications**

1. Particules de polymère métallisées, caractérisées en ce qu'elles sont constituées d'un polymère réticulé présentant un taux d'insolubles d'au moins 0,5 % en poids, et portant des groupes nucléophiles complexants des sels des métaux de potentiel d'oxydo-réduction supérieure à - 0,8 V et en ce qu'elles présentent à leur surface une "couche" métallique constituée d'au moins un métal à l'état de valence zéro de potentiel d'oxydo-réduction supérieur à - 0,8 V.

2. Particules selon la revendication 1 caractérisées en ce que le polymère réticulé fonctionnalisé est un copolymère dérivé de :
- 20 à 70 % en poids d'au moins un monomère monoéthylénique non ionique non complexant
- 0 à 10 % en poids d'au moins un acide carboxylique éthyléniquement insaturé
- 15 à 60 % en poids d'au moins un monomère monoéthylénique complexant des sels de métaux de potentiel d'oxydo-réduction supérieur à - 0,8 V
- 5 à 20 % en poids d'un monomère polyéthylénique réticulable.

3. Particules selon l'une quelconque des revendications précédentes caractérisées en ce que le polymère réticulé fonctionnalisé présente un taux d'insolubles d'au moins 50 % en poids.

4. Particules selon la revendication 2 ou 3 caractérisées en ce que le polymère réticulé fonctionnalisé est un copolymère dérivé de :
— 30 à 65 % en poids, d'au moins un monomère monoéthylénique non ionique non complexant
- 0 à 5 % en poids, d'au moins un acide carboxylique éthyléniquement insaturé
- 25 à 50 % en poids, d'au moins un monomère monoéthylénique complexant des sels de métaux de potentiel d'oxydo-réduction supérieur à - 0,8 V

- 10 à 20 % en poids, d'un monomère polyéthylénique réticulable.

5. Particules selon l'une quelconque des revendications précédentes caractérisées en ce que la "couche" métallique est constituée d'au moins un métal de potentiel d'oxydo-réduction d'au moins - 0,3 V.

6. Particules selon l'une quelconque des revendications précédentes caractérisées en ce que le grain de polymère réticulé fonctionnalisé présente un diamètre de l'ordre de 0,1 à 100 microns et la "couche" métallique une épaisseur de l'ordre de 0,05 à 0,1 micron.

7. Procédé de préparation des particules faisant l'objet de la revendication 1 caractérisé en ce qu'on métallise par voie chimique des grains de polymère réticulé ayant un taux d'insolubles d'au moins 0,5 % en poids, et portant des groupes nucléophiles complexants des sels des métaux de potentiel d'oxydo-réduction supérieur à - 0,8 V, l'opération de métallisation étant réalisée à l'aide de sels de métaux de potentiel d'oxydo-réduction supérieur à - 0,8 V.

8. Procédé selon la revendication 7 caractérisé en ce que l'opération de métallisation chimique est réalisée par mise en contact en phase liquide d'un sel minéral ou organique du métal à déposer avec les grains de polymère réticulé portant des motifs complexants et réduction jusqu'à l'état de valence zéro dudit métal.

9. Procédé selon l'une quelconque des revendications 7 et 8 caractérisé en ce que le polymère réticulé fonctionnalisé mis en oeuvre est un copolymère dérivé de :

- 20 à 70 % en poids d'au moins un monomère monoéthylénique non ionique non complexant

- 0 à 10 % en poids d'au moins un acide carboxylique éthyléniquement insaturé

- 15 à 60 % en poids d'au moins un monomère monoéthylénique complexant des sels de métaux de potentiel d'oxydo-réduction supérieur à - 0,8 V

- 5 à 20 % en poids d'un monomère polyéthylénique réticulable.

10. Procédé selon l'une quelconque des revendications 7 à 9 caractérisé en ce que le polymère réticulé fonctionnalisé mis en oeuvre présente un taux de réticulation d'au moins 50 % en poids.

11. Procédé selon l'une quelconque des revendications 9 ou 10 caractérisé en ce que le polymère réticulé fonctionnalisé mis en oeuvre est un copolymère dérivé de :

__ 30 à 65 % en poids, d'au moins un monomère monoéthylénique non ionique non complexant

- 0 à 5 % en poids, d'au moins un acide carboxylique éthyléniquement insaturé

- 25 à 50 % en poids, d'au moins un monomère monoéthylénique complexant des sels de métaux de potentiel d'oxydo-réduction supérieur à - 0,8 V

- 10 à 20 % en poids, d'un monomère polyéthylénique réticulable.

12. Procédé selon l'une quelconque des revendications 7 à 11 caractérisé en ce que les sels de métaux mis en oeuvre dérivent d'au moins un métal de potentiel d'oxydo-réduction d'au moins - 0,3 V

13. Procédé selon l'une quelconque des revendications 7 à 12 caractérisé en ce que les grains de polymère réticulé fonctionnalisé mis en oeuvre présentent une taille de l'ordre de 0,1 à 100 microns.

14. Procédé selon l'une quelconque des revendications 7 à 13 caractérisé en ce que la quantité de sel de métal mise en oeuvre correspond à 10 à 60 % en poids de métal par rapport au poids de polymère réticulé fonctionnalisé.

15. Utilisation des particules faisant l'objet de l'une quelconque des revendications 1 à 6 pour la préparation de matériaux électro conducteurs.

16. Utilisation des particules faisant l'objet de l'une quelconque des revendications 1 à 6 pour la préparation de colles ou de peintures électroconductrices.

Office européen
des brevets

**RAPPORT DE RECHERCHE EUROPEENNE**

Numero de la demande

EP 88 40 2406

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | US-A-3 890 281 (ANGSTADT et al.)<br>* Revendications 1-4,7,12,13; exemple 15 *<br>--- | 1 | C 08 K 3/08<br>C 08 K 9/12<br>H 01 B 1/22<br>C 09 D 5/24 |
| Y | PATENT ABSTRACTS OF JAPAN, vol. 10, no. 321 (C-382)[2377], 31 octobre 1986; & JP-A-61 133 243 (MITSUBISHI RAYON CO. LTD) 20-06-1986<br>* Résumé *<br>--- | 1 | |
| A,D | PATENT ABSTRACTS OF JAPAN, vol. 10, no. 139 (C-348)[2196], 22 mai 1986; & JP-A-60 262 846 (MITSUBISHI RAYON K.K.) 26-12-1985<br>--- | 1 | |
| A | PATENT ABSTRACTS OF JAPAN, vol. 6, no. 122 (C-112)[1000], 7 juillet 1982; & JP-A-57 49 632 (NIPPON SHOKUBAI KAGAKU KOGYO K.K.) 23-03-1982<br>----- | 1,6-8 | |
| | | | **DOMAINES TECHNIQUES RECHERCHES (Int. Cl.4)**<br><br>C 08 K<br>C 08 L |

Le présent rapport a été établi pour toutes les revendications

| Lieu de la recherche | Date d'achèvement de la recherche | Examinateur |
|---|---|---|
| LA HAYE | 24-01-1989 | SCHUELER D.H.H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..............................................................................
& : membre de la même famille, document correspondant

EPO FORM 1503 03.82 (P0402)